# EUROPÄISCHE PATENTANMELDUNG

(11) **EP 2 546 586 A2**
(43) Veröffentlichungstag der Anmeldung: **16.01.2013**
(21) Anmeldenummer: 12004374.0
(22) Anmeldetag: 09.06.2012
(51) Int. Cl.: F24J 2/52

(54) **Traganordnung für Solarmodule mit Biegesteg in der Aufnahmenut**

(30) Priorität: 06.07.2011 DE 202011102960 U
(71) Anmelder: Robert Bosch GmbH, 70469 Stuttgart (DE)
(72) Erfinder: Ludwig, Peter, 72072 Tuebingen (DE); Geist, Martin, 74226 Nordheim (DE)
(74) Vertreter: Maiß, Harald

(57) **Zusammenfassung**

Die Erfindung betrifft eine Traganordnung für eine fotovoltaische Anlage mit einer Vielzahl von ebenen, rechteckigen Solarmodulen, wobei die Traganordnung wenigstens zwei im Wesentlichen identische Modulträger (60) umfasst, die langgestreckt mit einer im Wesentlichen konstanten Querschnittsform ausgebildet sind, wobei sie zur Sonne geneigt sind, wobei ein Grundgerüst vorgesehen ist, auf dem die Modulträger (60) abgestützt sind, so dass sie im Wesentlichen in einer Ebene angeordnet sind, wobei das Grundgerüst im Erdboden verankerbar ist, wobei an zwei gegenüberliegenden Seitenflächen eines Modulträgers (60) je eine Aufnahmenut (62) vorgesehen ist, wobei die Aufnahmenuten eine erste und eine zweite gegenüberliegende, wenigstens abschnittsweise ebene Nutflanke (65; 66) und einen Nutgrund (67) aufweisen, wobei die Aufnahmenuten (62) zweier unmittelbar benachbarter Modulträger (60) aufeinander zu weisen, wobei deren einander zugeordnete Nutflanken (65; 66) im Wesentlichen in einer Ebene liegen, so dass diese beiden Aufnahmenuten (62) wenigstens ein Solarmodul an seinen Seitenrändern halten können, wobei das Solarmodul eine Modulebene definiert.

Erfindungsgemäß ist am Nutgrund (67) wenigstes einer Aufnahmenut (62) wenigstens ein Biegesteg (70; 71) einstückig am Modulträger (60) vorgesehen, wobei sich der Biegesteg (70; 71) im Wesentlichen senkrecht zur Modulebene erstreckt, wobei der Biegesteg (70; 71) wenigstens punktuell in Richtung zum benachbarten Modulträger (60) hin plastisch verbiegbar ist.

## Beschreibung

Die Erfindung betrifft eine Traganordnung gemäß dem Oberbegriff von Anspruch 1.

Aus der DE 10 2009 022 731 A1 ist eine Traganordnung bekannt. Gemäß der Fig. 1 der DE 10 2009 022 731 A1 umfasst die Traganordnung Modulträger 50, die auf einem Grundgerüst abgestützt sind. Das Grundgerüst umfasst mehrere senkrechte Rammpfähle 24 in Form von Blechbiegeprofilen, die in den Erdboden gerammt werden, um diese dort zu verankern. An den Rammpfählen ist je ein zur Sonne geneigtes Verbindungsteil 23 befestigt, auf dem wiederum zwei parallele Längsträger 21 a; 21 b abgestützt sind, die sich quer zu den Modulträgern erstrecken, wobei sie fest mit diesen verbunden sind.

Gemäß der Fig. 1a der DE 10 2009 022 731 A1 sind die Modulträger langgestreckt mit einer im Wesentlichen konstanten Querschnittsform ausgeführt, wobei sie aus Aluminium im Strangpressverfahren hergestellt sind. Je zwei benachbarte parallele Modulträger halten eine oder mehrere Solarmodule 30a; 30b an ihren Seitenrändern. Bei den Solarmodulen handelt es sich um fotovoltaische Solarmodule, wobei die vorliegende Erfindung auch für thermische Solarmodule anwendbar ist. Die Solarmodule sind in Form einer rechteckigen, ebenen Platte ausgeführt.

Gemäß der Fig. 2 der DE 10 2009 022 731 A1 weist jeder Modulträger zwei voneinander weg weisende Aufnahmenuten 54a; 54b auf. Die beiden Aufnahmenuten besitzen jeweils eine erste und eine zweite dazu parallele, wenigstens abschnittsweise ebene Nutflanke und einen Nutgrund. Die einander zugeordneten Nutflanken liegen im Wesentlichen in einer Ebene, so dass die Aufnahmenuten zweier benachbarter Modulträger die Solarmodule an ihren Seitenrändern halten können.

Der Nachteil der bekannten Traganordnung besteht darin, dass der Abstand der Modulträger nur mit einer begrenzten Genauigkeit hergestellt werden kann. Dabei muss in jedem Fall sichergestellt sein, dass der Abstand nicht zu klein ist, damit die Solarmodule ohne zu Klemmen in die Aufnahmenut eingeschoben werden können. Im Ergebnis ist der Abstand der Modulträger damit oft etwas zu groß, so dass die Solarmodule quer zu den Modulträger mit Spiel gehalten sind.

Die Aufgabe der Erfindung besteht darin, eine Möglichkeit bereitzustellen, das genannte Spiel nachträglich zu eliminieren.

Gemäß dem selbständigen Anspruch wird diese Aufgabe dadurch gelöst, dass am Nutgrund wenigstens einer Aufnahmenut wenigstens ein Biegesteg einstückig am Modulträger vorgesehen ist, wobei sich der Biegesteg im Wesentlichen senkrecht zur Modulebene erstreckt, wobei der Biegesteg wenigstens punktuell in Richtung zum benachbarten Modulträger hin plastisch verbiegbar ist. Der Biegesteg liegt an einer Seitenfläche des Solarmoduls an. Durch die plastische und damit dauerhafte Verformung des Biegestegs kann ein möglicherweise zwischen dem Biegesteg und der Seitenfläche des Solarmoduls vorhandener Freiraum verschlossen werden. Dabei kann der Biegesteg über seine gesamte Länge verformt werden. Es reicht jedoch aus, wenn die Verformung nur punktuell stattfindet. Eine derartige punktuelle Verformung kann leicht manuell mit einem Handwerkzeug hergestellt werden.

In den abhängigen Ansprüchen sind vorteilhafte Weiterbildungen und Verbesserungen der Erfindung angegeben.

Der Biegesteg kann in einem Eckbereich zwischen dem Nutgrund und einer Nutflanke der Aufnahmenut vorgesehen sein, wobei er zur gegenüberliegenden Nutflanke weist. Damit ist der Biegesteg gut zugänglich, so dass das Werkzeug zu seiner Verformung leicht angesetzt werden kann.

In einer Aufnahmenut können ein erster und ein zweiter Biegesteg vorgesehen sein, die aufeinander zu weisen. Bei besonders dicken Solarmodulen, insbesondere solchen, die einen gesonderten Rahmen aufweisen, reicht es nicht aus, wenn der erfindungsgemäße Toleranzausgleich nur punktuell in einem Eckbereich durchgeführt wird. Es ist vielmehr notwendig, den Toleranzausgleich in Dickenrichtung des Solarmoduls an zwei gegenüberliegenden Stellen vorzunehmen, damit das Spiel sicher beseitigt wird.

Die beiden Aufnahmenuten eines Modulträgers können durch eine ebene plattenartige erste Trennwand voneinander getrennt sind, wobei beide Aufnahmenuten einen ersten Biegesteg aufweisen, wobei beide ersten Biegestege spiegelsymmetrisch zur ersten Trennwand angeordnet sind, wobei die erste Trennwand und die ersten Biegestege einstückig in eine zweite Trennwand übergehen, die eine größere Breite als die erste Trennwand aufweist, wobei sie fluchtend zu dieser angeordnet ist. Die erste Trennwand wird zwecks Materialersparnis möglichst dünn ausgeführt. Dabei soll der Modulträger eine hohe Biegesteifigkeit aufweisen. Hiefür ist die zweite Trennwand vorgesehen. Diese bildet gleichzeitig eine steife Befestigungsbasis für die Biegestege. Weiter bildet die zweite Trennwand einen steifen Abschnitt des Nutgrunds, der als Anlagefläche für das Solarmodul dient, wenn der Biegesteg nicht verformt ist.

Der Modulträger kann einen ebenen Kopfflansch aufweisen, der senkrecht zur ersten Trennwand ausgerichtet ist, wobei er einstückig mit der zweiten Trennwand verbunden ist, wobei der Kopfflansch die erste Nutflanke der beiden Aufnahmenuten des Modulträgers bildet. Die breite zweite Trennwand ist damit in einem Eckbereich der Aufnahmenut angeordnet und versteift diese besonders gut.

An der zweiten Nutflanke, welche dem Grundgerüst zugewandt ist, kann eine Ablaufnut vorgesehen sein, welche benachbart zum Nutgrund der Aufnahmenut angeordnet ist. Zwischen den Nutflanken und dem Solarmodul kann Regenwasser in die Aufnahmenut eindringen. Dieses kann über die Ablaufnut abfließen, wobei es vorzugsweise am unteren Ende des Modulträgers gesammelt aus dem Modulträger heraus geleitet wird.

Die Querschnittsform der Modulträger kann spiegelsymmetrisch ausgebildet sein, wobei sie einen ersten und einen zweiten dünnen ebenen Fußflanschabschnitt aufweist, welche einstückig miteinander verbunden sind, wobei der erste Fußflanschabschnitt den ebenen Abschnitt der zweiten Nutflanke der Aufnahmenut definiert, wobei der zweite Fußflanschabschnitt die Ablaufnut begrenzt, wobei die Ablaufnut im Querschnitt betrachtet V-förmig ausgebildet ist. Der Materialverbrauch für einen derart geformten Modulträger ist besonders gering. Die V-Form der Ablaufnut ist dabei ohne Nachteil für deren Funktion. Es ist anzumerken, dass die elektrische Leistung einer fotovoltaischen Solaranlage vergleichweise gering ist. Die Traganordnung muss daher besonders kostengünstig sein, um wirtschaftlich Strom produzieren zu können. Dabei können bereits kleine Materialeinsparungen am Modulträger über die gesamte Anlage betrachtet zu großen Kosteneinsparungen führen, da insgesamt sehr viele Modulträger benötigt werden.

Der zweite Fußflanschabschnitt kann mit einem L-förmigen Schenkel einstückig verbunden sein, der zusammen mit seinem Spiegelbild eine hinterschnittene Nut begrenzt. Hierdurch wird die hinterschnittene Nut besonders Material sparend bereit gestellt. Insbesondere kann der L-förmige Schenkel mit einer geringen Wanddicke ausgeführt werden.

Die erste Trennwand und der zweite Fußflanschabschnitt können über einen dritten Fußflanschabschnitt einstückig miteinander verbunden sein, wobei der dritte Fußflanschabschnitt die Ablaufnut begrenzt, wobei der dritte Fußflanschabschnitt mit einem Fortsatz einstückig verbunden ist, der auf der von der Aufnahmenut abgewandten Seite angeordnet ist, wobei der Fortsatz zusammen mit seinem Spiegelbild einen kreisförmigen, geschlitzten Hohlraum im Modulträger begrenzt. Es ist an sich bekannt, Strangpressprofile mit einem in Längsrichtung verlaufenden Hohlraum auszustatten, der beispielsweise als Aufnahmebohrung für einen selbstschneidenden Schraubbolzen dient. Durch die vorgeschlagene Anordnung kann der genannte Hohlraum besonders Material sparend bereit gestellt werden. Durch den vorgeschlagenen Schlitz wird die Herstellung des Hohlraums im Strangpressverfahren vereinfacht, wobei insbesondere das Strangpresswerkzeug einfach aufgebaut ist.

An wenigstens einer Stirnseite des Modulträgers kann eine gesonderte Sicherungsplatte vorgesehen sein, welche die beiden Aufnahmenuten wenigstens abschnittsweise überdeckt, wobei die Sicherungsplatte von einem Schraubbolzen durchsetzt wird, der in den kreisförmigen, geschlitzten Hohlraum eingreift. Die Sicherungsplatte dient als Endanschlag für die Solarmodule, damit diese nicht in Erstreckungsrichtung der Modulträger aus den Aufnahmenuten herausrutschen können. Der vorgeschlagene Endanschlag ist besonders einfach und damit kostengünstig aufgebaut. Bei der Sicherungsplatte handelt es sich vorzugsweise um eine kreisrunde Scheibe, die als Normteil am Markt verfügbar ist.

Der zweite Biegesteg kann einstückig mit dem dritten Fußflanschabschnitt verbunden sein. Auf diese Weise kann der erforderliche Abstand zwischen der ersten Trennwand und dem zweiten Biegesteg bereit gestellt werden, ohne dass hierfür ein nennenswerter zusätzlicher Materialaufwand erforderlich ist.

Der Modulträger kann wenigstens eine V-förmige Nut aufweisen, deren Tiefe weniger als 1,0 mm beträgt. Die V-förmige Nut dient zum einfacheren Ansetzen eines Bohrers einer Handbohrmaschine, damit während der Montage der Traganordnung leicht Löcher in den Modulträger gebohrt werden können.

Die Erfindung wird im Folgenden anhand der beigefügten Zeichnungen näher erläutert. Es stellt dar:
- Fig. 1: eine perspektivische Ansicht einer erfindungsgemäßen Traganordnung;
- Fig. 2: einen Querschnitt des Längsträgers im Bereich der Verbindung mit dem Querträger;
- Fig. 3: einen Querschnitt des Modulträgers; und
- Fig. 4: eine perspektivische Teilansicht des unteren Endes des Modulträgers.

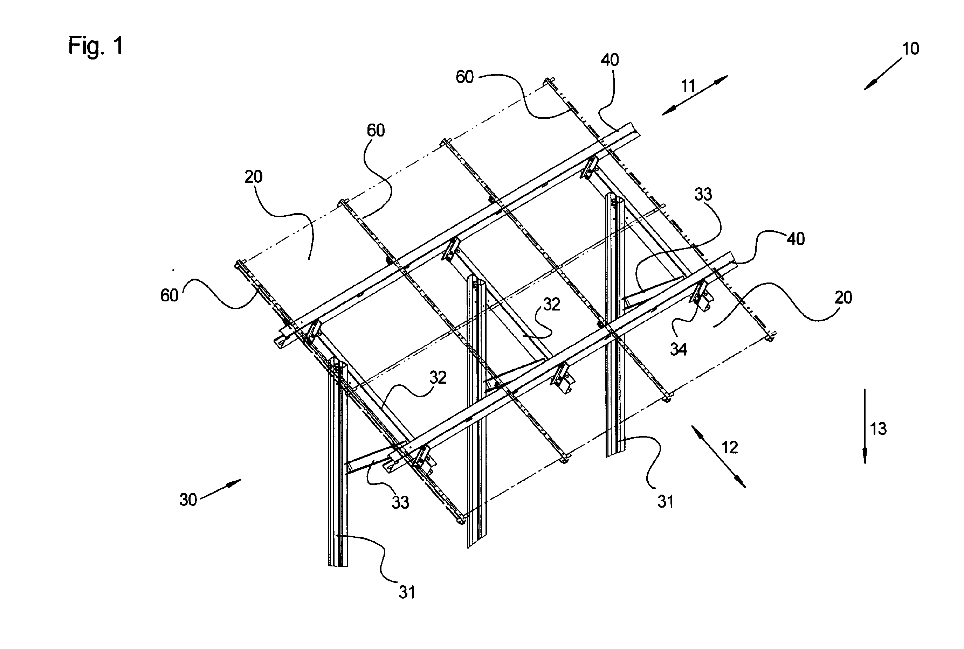

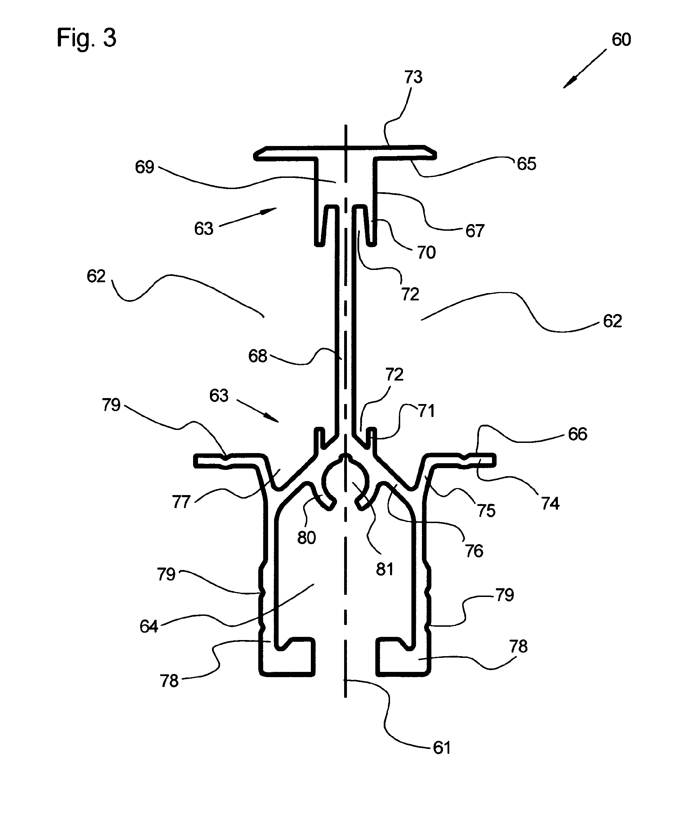

Fig. 1 zeigt eine perspektivische Ansicht einer erfindungsgemäßen Traganordnung 10 für eine fotovoltaische Anlage. Die fotovoltaische Anlage umfasst eine Vielzahl plattenartiger, rechteckiger Solarmodule 20. Die Solarmodule 20 werden zwischen zwei unmittelbar benachbarten Modulträger 60 gehalten, die sich mit einer konstanten Querschnittsform in eine Querrichtung 12 erstrecken. Die Modulträger 60 bestehen aus Aluminium und sind im Strangpressverfahren hergestellt. Zur Halterung der Solarmodule 20 weisen die Modulträger aufeinander zu weisende Aufnahmenuten (Nr. 62; Fig. 3) auf, deren Breite an die Dicke der Solarmodule 20 angepasst ist. Die Modulträger 60 sind zur Sonne geneigt, damit die Solarmodule 20 eine hohe elektrische Leistung aufweisen. In Fig. 1 sind insgesamt vier Modulträger 60 dargestellt, wobei üblicherweise wesentlich mehr parallele Modulträger 60 vorgesehen sind.

Die Modulträger 60 sind auf einem Grundgerüst 30 abgestützt, das im Erdboden verankert ist. Sie sind dabei unmittelbar auf zwei im Wesentlichen identischen Längsträgern 40 abgestützt, welche sich mit einer konstanten U-förmigen Querschnittsform in eine Längsrichtung 11 erstrecken, die quer zur Querrichtung 12 ausgerichtet ist. Die Längsträger 40 sind in Form eines Blechbiegeprofils aus verzinktem Stahlblech ausgeführt. Die Längsträger 40 sind wiederum auf Querträgern 32 abgestützt, die sich mit einer konstanten U-förmigen Querschnittsform in Querrichtung 12 erstrecken. Die Querträger 32 sind ebenfalls in Form eines Blechbiegeprofils aus verzinktem Stahlblech ausgeführt. An den Kreuzungsstellen zwischen Längs- und Querträger 40; 32 sind gesonderte Verbindungsteile 34 mit L-förmiger Querschnittsform vorgesehen, welche mit den genannten Trägern 40; 32 verschraubt sind.

Die Querträger 32 sind wiederum mit Vertikalträgern 31 verschraubt, die sich mit einer konstanten Sigma-förmigen Querschnittsform in Richtung der Schwerkraft 13 erstrecken, wobei sie in den (nicht dargestellten) Erdboden gerammt sind. Die Vertikalträger 31 sind ebenfalls in Form eines Blechbiegeprofils aus verzinktem Stahlblech ausgeführt. Weiter ist zwischen dem Querträger 32 und dem Vertikalträger 31 eine Strebe 33 zur Abstützung von Biegemomenten vorgesehen, welche mit den genannten Teilen 31; 32 verschraubt ist. Die Strebe 33 ist ebenfalls als Blechbiegeprofil aus verzinktem Stahlblech mit einer konstanten Querschnittsform ausgeführt.

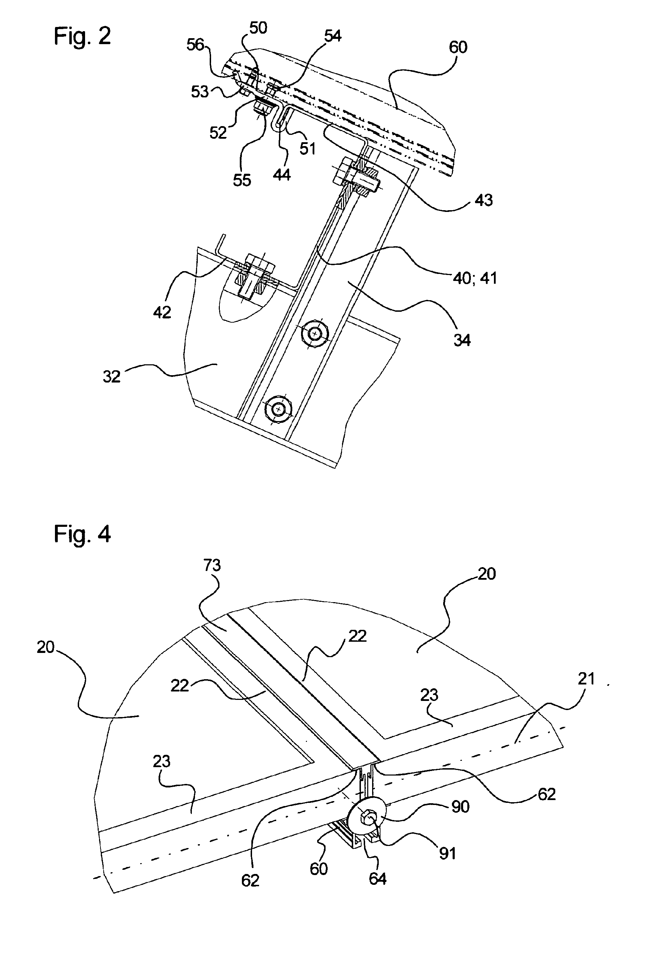

Fig. 2 zeigt einen Querschnitt des Längsträgers 40 im Bereich der Verbindung mit dem Querträger 32. Zu erkennen ist insbesondere die Querschnittsform des Längsträgers 40 mit der ebenen Basis 41, den senkrecht davon abstehenden ebenen Schenkeln 42; 43 und den senkrechten Umbiegungen 44 an den Schenkeln 42; 43. Der Querträger 32 besitzt die gleiche Querschnittsform wie die Längsträger 40, jedoch mit anderen Außenabmessungen.

Der erste Schenkel 42 des Längsträgers 40 liegt auf dem Querträger 32 auf. Der Modulträger 60 liegt auf dem zweiten Schenkel 43 des Längsträgers 40 auf.

Der Querträger 32 und der Längsträger 40 sind über ein gesondertes Verbindungsteil 34 fest miteinander verschraubt. Das Verbindungsteil 34 ist im Querschnitt betrachtet L-förmig ausgebildet und besteht aus verzinktem Stahl. Das Verbindungsteil 34 ist so lang, dass es gerade nicht über den Quer- und den Längsträger 32; 40 übersteht.

Weiter sind gesonderte Klemmteile 50 vorgesehen, mit denen die Modulträger 60 an den Längsträgern 40 befestigt sind. Das Klemmteil 50 ist in Form eines Blechbiegeteils ausgeführt. Es besitzt eine U-förmige Haltekralle 51, welche die Umbiegung 44 am zweiten Schenkel 43 des Längsträgers 40 hintergreift. Das Klemmteil 50 kann dabei im ungeklemmten Zustand frei entlang der Umbiegung 44 verschoben werden. Die Haltekralle 51 ist mit einem Hebelarm 52 einstückig verbunden, der nur an seinem Endbereich 53 auf dem Modulträger 60 aufliegt. Zwischen dem genannten Endbereich 53 und der Haltekralle 51 ist eine Hammerschraube 54 vorgesehen, die in eine hinterschnittene Nut (Nr. 64; Fig. 3) am Modulträger 60 eingreift. Mit der zugehörigen Mutter 55 kann das Klemmteil 50 gegen den Modulträger 60 und den Längsträger 40 verspannt werden. Der umgebogene Fortsatz 56 am Klemmteil 50 greift in die hinterschnittene Nut am Modulträger 60 ein und verhindert, dass sich das Klemmteil 50 beim Festdrehen der Mutter 55 gegenüber dem Modulträger 60 verdreht.

Fig. 3 zeigt einen Querschnitt des Modulträgers 60. Der Modulträger 60 ist aus Aluminium im Strangpressverfahren hergestellt. Bei der Gestaltung der Querschnittsform wurde besonderes Augenmerk auf geringen Materialverbrauch bei gleichzeitig hoher Biegesteifigkeit des Modulträgers 60 gelegt.

Der Modulträger 60 ist insgesamt spiegelsymmetrisch ausgebildet, wobei die Symmetrieebene 61 durch die erste schmale Trennwand 68 definiert wird. Die spiegelsymmetrischen Aufnahmenuten 62 zu beiden Seiten der ersten Trennwand 68 weisen dementsprechend voneinander weg. Oberhalb der ersten Trennwand 68 ist fluchtend eine zweite, breitere Trennwand 69 vorgesehen, die einstückig mit der ersten Trennwand 68 verbunden ist. Der erste Biegesteg 70 ist einstückig mit der zweiten Trennwand 69 verbunden, wobei er sich mit Abstand parallel zur ersten Trennwand 68 erstreckt. Die erste Trennwand 68 ist dabei senkrecht zur Modulebene (Nr. 21; Fig. 4) ausgerichtet. Die Breite des ersten Biegesteges 70 ist gerade so groß gewählt, dass dieser mit einem Flachschraubendreher als Werkzeug punktuell plastisch verformt werden kann. Der Flachschraubendreher wird dabei mit seiner Schneide in den Freiraum 72 zwischen erstem Biegesteg 70 und erster Trennwand 68 eingeführt und anschließend gedreht, so dass sich der erste Biegesteg 70 punktuell plastisch verformt. Die genannte Drehbewegung kann dabei durch eine Hebelbewegung ergänzt bzw. ersetzt werden.

Die zweite Trennwand 69 ist weiterhin einstückig mit dem Kopfflansch 73 verbunden, der senkrecht zur ersten Trennwand 68 ausgerichtet ist, so dass er den ebenen Abschnitt der ersten Nutflanke 65 bildet. Der Kopfflansch 73 ist dabei in Form einer ebenen Platte ausgebildet.

Am unteren Ende der ersten Trennwand 68 ist der Fußflansch 74; 75; 76 vorgesehen, welcher die zweite Nutflanke 66 der Aufnahmenut 62 bildet. Ein Fußflansch setzt sich aus insgesamt drei ebenen plattenartigen Abschnitten 74; 75; 76 zusammen, die einstückig miteinander verbunden sind. Der erste Fußflanschabschnitt 74 bildet den ebenen Abschnitt der zweiten Nutflanke 66. Der zweite und der dritte Fußflanschabschnitt 75; 76 bilden zusammen eine V-förmige Ablaufnut 77, die als Ablauf für Regenwasser dient. Am dritten Fußflanschabschnitt 76, der einstückig mit der ersten Trennwand 68 verbunden ist, ist weiterhin ein zweiter Biegesteg 71 vorgesehen, der sich mit Abstand parallel zur ersten Trennwand 68 erstreckt. Der erste und der zweite Biegesteg 70; 71 sind somit in den beiden Eckbereichen 63 der zugeordneten Aufnahmenut 62 angeordnet, wobei sie aufeinander zu weisen. Der erste und der zweite Biegesteg 70; 71 bilden zusammen mit der zweiten Trennwand 69 den Nutgrund 67 der Aufnahmenut 62, an dem das zugeordnete Solarmodul (Nr. 20; Fig. 4) anliegen kann. Die erste Trennwand 68 kann dagegen nie zur Anlage mit dem Solarmodul gelangen. Sie dient nur der mechanischen Verbindung zwischen Kopf-und Fußflansch 73; 74; 75; 76.

Die Übergangsstelle zwischen dem zweiten und dem dritten Fußflanschabschnitt 75; 76 ist weiterhin mit einem L-förmigen Schenkel 78 einstückig verbunden, wobei die beiden spiegelsymmetrischen L-förmigen Schenkel 78 eine hinterschnittene Nut 64 begrenzen. Die Innenquerschnittsform der hinterschnittenen Nut 64 ist in an sich bekannter Weise zum Eingriff mit der bereits angesprochenen Hammerschraube (Nr. 54, Fig. 2) ausgebildet.

An der Außenseite der L-förmigen Schenkel 78 sind jeweils insgesamt zwei V-förmige Nuten 79 vorgesehen, deren Tiefe weniger als 1 mm beträgt. Die V-förmigen Nuten 79 dienen der Zentrierung des Bohrers einer Handbohrmaschine, damit die genannten Schenkel 78 ohne aufwändige Anreißarbeiten mit (nicht dargestellten) Bohrungen versehen werden können. Der erste Fußflanschabschnitt 74 ist ebenfalls mit einer derartigen V-förmigen Nut 79 versehen.

Weiter ist auf die beiden spiegelbildlichen Fortsätze 80 hinzuweisen, die zusammen einen kreisförmigen geschlitzten Hohlraum 81 begrenzen. Die Fortsätze 80 sind einstückig mit dem dritten Fußflanschabschnitt 76 verbunden, wobei sie auf der der Aufnahmenut 62 abgewandten Seite angeordnet sind.

Fig. 4 zeigt eine perspektivische Teilansicht des unteren Endes des Modulträgers 60. Zu erkennen sind insbesondere die Solarmodule 20, die mit ihrem Rahmen 23 in die Aufnahmenuten 62 der Modulträger 60 eingreifen. Der Rahmen 23 eines Solarmoduls 20 erstreckt sich an allen vier Seiten entlang des Seitenrandes 22 des Solarmoduls 20, wobei er typischerweise aus Aluminiumstrangpressprofilen zusammengesetzt ist. Auf der zur Sonne zugewandten Seite des Rahmens 23 ist eine transparente Platte aus Glas oder Kunststoff angeordnet, welche die Solarzellen vor Umwelteinflüssen schützt. Die gegenüberliegende Rückseite des Rahmens 23 ist ebenfalls mit einer Platte verschlossen, die aber nicht notwendigerweise durchsichtig sein muss.

An der ebenen Stirnfläche des Modulträgers 60 liegt eine Sicherungsplatte 90 auf, die in Form einer kreisrunden Scheibe ausgeführt ist. Die Sicherungsplatte 90 wird von einem Schraubbolzen 91 durchsetzt, welcher in den geschlitzten Hohlraum (Nr. 81; Fig. 3) des Modulträgers eingreift. Der Schraubbolzen 91 ist vorzugsweise mit einem selbstschneidenden Gewinde ausgestattet. Die Sicherungsplatte 90 überdeckt die beiden Aufnahmenuten 62 des Modulträgers 60 abschnittsweise, so dass die Solarmodule 20 nicht in Erstreckungsrichtung des Modulträgers 60 aus den Aufnahmenuten 62 herausrutschen können.

### Bezugszeichenliste

- 10: Traganordnung
- 11: Längsrichtung
- 12: Querrichtung
- 13: Richtung der Schwerkraft

- 20: Solarmodul
- 21: Modulebene
- 22: Seitenrand
- 23: Rahmen

- 30: Grundgerüst
- 31: Vertikalträger
- 32: Querträger
- 33: Strebe
- 34: Verbindungsteil

- 40: Längsträger
- 41: Basis
- 42: erster Schenkel
- 43: zweiter Schenkel
- 44: Umbiegung

- 50: Klemmteil
- 51: Haltekralle
- 52: Hebelarm
- 53: Endbereich
- 54: Hammerschraube
- 55: Mutter
- 56: umgebogener Fortsatz
- 60: Modulträger
- 61: Symmetrieebene
- 62: Aufnahmenut
- 63: Eckbereich
- 64: hinterschnittene Nut
- 65: erste Nutflanke
- 66: zweite Nutflanke
- 67: Nutgrund
- 68: erste Trennwand
- 69: zweite Trennwand

- 70: erster Biegesteg
- 71: zweiter Biegesteg
- 72: Freiraum
- 73: Kopfflansch
- 74: erster Fußflanschabschnitt
- 75: zweiter Fußflanschabschnitt
- 76: dritter Fußflanschabschnitt
- 77: Ablaufnut
- 78: L-förmiger Schenkel
- 79: V-förmige Nut
- 80: Fortsatz
- 81: geschlitzter Hohlraum

- 90: Sicherungsplatte
- 91: Schraubbolzen

## Patentansprüche

1. Traganordnung (10) für eine fotovoltaische Anlage mit einer Vielzahl von ebenen, rechteckigen Solarmodulen (20), wobei die Traganordnung wenigstens zwei im Wesentlichen identische Modulträger (60) umfasst, die langgestreckt mit einer im Wesentlichen konstanten Querschnittsform ausgebildet sind, wobei sie zur Sonne geneigt sind, wobei ein Grundgerüst (30) vorgesehen ist, auf dem die Modulträger (60) abgestützt sind, so dass sie im Wesentlichen in einer Ebene angeordnet sind, wobei das Grundgerüst (30) im Erdboden verankerbar ist, wobei an zwei gegenüberliegenden Seitenflächen eines Modulträgers (60) je eine Aufnahmenut (62) vorgesehen ist, wobei die Aufnahmenuten eine erste und eine zweite gegenüberliegende wenigstens abschnittsweise ebene Nutflanke (65; 66) und einen Nutgrund (67) aufweisen, wobei die Aufnahmenuten (62) zweier unmittelbar benachbarter Modulträger (60) aufeinander zu weisen, wobei deren einander zugeordnete Nutflanken (65; 66) im Wesentlichen in einer Ebene liegen, so dass diese beiden Aufnahmenuten (62) wenigstens ein Solarmodul (20) an seinen Seitenrändern (22) halten können, wobei das Solarmodul (20) eine Modulebene (21) definiert,
**dadurch gekennzeichnet, dass** am Nutgrund (67) wenigstens einer Aufnahmenut (62) wenigstens ein Biegesteg (70; 71) einstückig am Modulträger (60) vorgesehen ist, wobei sich der Biegesteg (70; 71) im Wesentlichen senkrecht zur Modulebene (21) erstreckt, wobei der Biegesteg (70; 71) wenigstens punktuell in Richtung zum benachbarten Modulträger (60) hin plastisch verbiegbar ist.

2. Traganordnung nach Anspruch 1,
**dadurch gekennzeichnet, dass** der Biegesteg (70; 71) in einem Eckbereich (63) zwischen dem Nutgrund (67) und einer Nutflanke (65; 66) der Aufnahmenut (62) vorgesehen ist, wobei er zur gegenüberliegenden Nutflanke (66; 65) weist.

3. Traganordnung nach einem der vorstehenden Ansprüche,
**dadurch gekennzeichnet, dass** in einer Aufnahmenut (62) ein erster und ein zweiter Biegesteg (70; 71) vorgesehen ist, die aufeinander zu weisen.

4. Traganordnung nach einem der Ansprüche 2 bis 3,
**dadurch gekennzeichnet, dass** die beiden Aufnahmenuten (62) eines Modulträgers durch eine ebene plattenartige erste Trennwand (68) voneinander getrennt sind, wobei beide Aufnahmenuten (62) einen ersten Biegesteg (70) aufweisen, wobei beide ersten Biegestege (70) spiegelsymmetrisch zur ersten Trennwand (68) angeordnet sind, wobei die erste Trennwand (68) und die ersten Biegestege (70) einstückig in eine zweite Trennwand (69) übergehen, die eine größere Breite als die erste Trennwand (68) aufweist, wobei sie fluchtend zu dieser angeordnet ist.

5. Traganordnung nach Anspruch 4,
**dadurch gekennzeichnet, dass** der Modulträger (60) einen ebenen Kopfflansch (73) aufweist, der senkrecht zur ersten Trennwand (68) ausgerichtet ist, wobei er einstückig mit der zweiten Trennwand (69) verbunden ist, wobei der Kopfflansch (73) die erste Nutflanke (65) der beiden Aufnahmenuten (62) des Modulträgers (60) bildet.

6. Traganordnung nach einem der vorstehenden Ansprüche,
**dadurch gekennzeichnet, dass** an der zweiten Nutflanke (69), welche dem Grundgerüst (30) zugewandt ist, eine Ablaufnut (77) vorgesehen ist, welche benachbart zum Nutgrund (67) der Aufnahmenut (62) angeordnet ist.

7. Traganordnung nach Anspruch 6,
**dadurch gekennzeichnet, dass** die Querschnittsform der Modulträger (60) spiegelsymmetrisch ausgebildet ist, wobei sie einen ersten und einen zweiten dünnen, ebenen Fußflanschabschnitt (74; 75) aufweist, welche einstückig miteinander verbunden sind, wobei der erste Fußflanschabschnitt (74) den ebenen Abschnitt der zweiten Nutflanke (66) der Aufnahmenut (62) definiert, wobei der zweite Fußflanschabschnitt (75) die Ablaufnut (77) begrenzt, wobei die Ablaufnut (77) im Querschnitt betrachtet V-förmig ausgebildet ist.

8. Traganordnung nach Anspruch 7,
**dadurch gekennzeichnet, dass** der zweite Fußflanschabschnitt (75) mit einem L-förmigen Schenkel (78) einstückig verbunden ist, der zusammen mit seinem Spiegelbild eine hinterschnittene Nut (64) begrenzt.

9. Traganordnung nach Anspruch 7 oder 8, rückbezogen auf Anspruch 4,
**dadurch gekennzeichnet, dass** die erste Trennwand (68) und der zweite Fußflanschabschnitt (75) über einen dritten Fußflanschabschnitt (76) einstückig miteinander verbunden ist, wobei der dritte Fußflanschabschnitt (76) die Ablaufnut (77) begrenzt, wobei der dritte Fußflanschabschnitt (76) mit einem Fortsatz (80) einstückig verbunden ist, der auf der von der Aufnahmenut (62) abgewandten Seite angeordnet ist, wobei der Fortsatz (80) zusammen mit seinem Spiegelbild einen kreisförmigen, geschlitzten Hohlraum (81) im Modulträger (60) begrenzt.

10. Traganordnung nach Anspruch 9,
**dadurch gekennzeichnet, dass** an wenigstens einer Stirnseite des Modulträgers (60) eine gesonderte Sicherungsplatte (90) vorgesehen ist, welche die beiden Aufnahmenuten (62) wenigstens abschnittsweise überdeckt, wobei die Sicherungsplatte (90) von einem Schraubbolzen (91) durchsetzt wird, der in den kreisförmigen, geschlitzten Hohlraum (81) eingreift.

11. Traganordnung nach Anspruch 9 oder 10, rückbezogen auf Anspruch 3
**dadurch gekennzeichnet, dass** der zweite Biegesteg (71) einstückig mit dem dritten Fußflanschabschnitt (76) verbunden ist.

12. Traganordnung nach einem der vorstehenden Ansprüche,
**dadurch gekennzeichnet, dass** der Modulträger wenigstens eine V-förmige Nut (79) aufweist, deren Tiefe weniger als 1,0 mm beträgt.
